# EUROPEAN PATENT SPECIFICATION

(11) **EP 3 705 857 B1**
(45) Date of publication and mention of the grant of the patent: **22.01.2025**
(21) Application number: 20158911.6
(22) Date of filing: 23.02.2020
(51) Int. Cl.: G01G 19/07

(54) **AIRCRAFT LANDING WEIGHT DETERMINATION SYSTEMS AND METHODS**
SYSTEME UND VERFAHREN ZUR BESTIMMUNG DES LANDEGEWICHTS EINES FLUGZEUGS
SYSTÈMES ET PROCÉDÉS DE DÉTERMINATION DE POIDS D'ATTERRISSAGE D'AÉRONEF

(30) Priority: 04.03.2019 US 201916291041
(43) Date of publication of application: 09.09.2020
(73) Proprietor: The Boeing Company, Arlington, VA 22202 (US)
(72) Inventor: NAKHJAVANI, Omid B., Chicago, Illinois 60606-1596 (US); PARKER, Andrew J., Chicago, Illinois 60606-1596 (US); SCHIMERT, James, Chicago, Illinois 60606-1596 (US); YUAN, Jun, Chicago, Illinois 60606-1596 (US)
(74) Representative: Bryn-Jacobsen, Caelia

(56) References cited:
- EP-A1- 2 772 732

## Description

### FIELD OF THE DISCLOSURE

Examples of the present disclosure generally relate to aircraft landing weight determination systems and methods.

### BACKGROUND OF THE DISCLOSURE

Various types of aircraft are used to transport passengers and cargo between various locations. Each aircraft typically flies between different locations according to a defined flight plan or path. For example, an aircraft departs from a departure location and flies to an arrival location.

Certain governmental regulations and airport restrictions define a maximum gross weight for a particular aircraft upon landing at an airport. That is, if the gross weight of the aircraft of the aircraft upon landing at the airport exceeds a predefined maximum weight threshold, the operating airline may be assessed a fine, for example.

The gross weight of the aircraft is the total weight of the aircraft including freight, fuel, passengers, and the like. As can be appreciated, the amount of fuel aboard an aircraft prior to take off is substantially more than the amount of fuel aboard the aircraft after the aircraft has landed at an arrival airport. That is, as fuel is burned, there is less fuel onboard the aircraft, and therefore the weight of the aircraft decreases.

However, known methods of estimating gross weight of an aircraft may not be accurate in relation to fuel quantity. Such methods may lead to overweight conditions at an arrival airport.
EP2772732A1, in accordance with its abstract states, a system for validating ground determination of gross weight of aircraft includes sensor(s) that generates information regarding ground determination of gross weight while parked at parking bay; processing device that receives information regarding ground determination of gross weight of the aircraft from sensor(s); and computer memory communicatively coupled to processing device. Processing device determines ground determination based on information regarding ground determination of gross weight generated by sensor. Processing device determines gross weight in air after takeoff based on indicated airspeed, angle of attack, and thrust applied to aircraft. Processing device determines error between ground determination and air determination of gross weight taking into account reduction in gross weight due to fuel consumed since receiving ground determination. Processing device updates information regarding relationship between ground determination and air determination of gross weight. Computer memory stores updated information regarding relationship for use next time aircraft parks at parking bay.

### SUMMARY OF THE DISCLOSURE

The present invention is set out in the independent claims, with some optional features set out in the claims dependent thereto.

A need exists for a system and method for accurately estimating and determining a gross weight of an aircraft. Further, a need exists for a system and method that allow an aircraft operator to confidently predict a gross weight of an aircraft at an arrival location. Moreover, a need exists for a system and method for accurately determining a gross weight of an aircraft during a flight and predict the gross weight upon landing.

With those needs in mind, certain examples of the present disclosure provide an aircraft landing weight determination system that is configured to determine an accurate gross weight of an aircraft.

The gross weight determination control unit may determine the accurate gross weight of the aircraft at any point during a flight of the aircraft between a departure gate at a departure location and an arrival gate at an arrival location.

In at least one example, the gross weight determination control unit may predict a gross weight of the aircraft at an arrival location before landing based on the accurate gross weight of the aircraft.

The aircraft landing weight determination system may also include a flight computer in communication with the gross weight determination control unit. The flight computer stores flight data for the aircraft.

The aircraft landing weight determination system may also include one or more fuel sensors in communication with the gross weight determination control unit. The fuel sensor(s) are configured to determine an amount of fuel onboard the aircraft.

The aircraft landing weight determination system may also include one or more weight sensors in communication with the gross weight determination control unit. The weight sensor(s) are configured to detect a gross weight of the aircraft.

The aircraft landing weight determination system may also include a weight threshold database in communication with the gross weight determination control unit. The weight threshold database stores a maximum weight threshold for the aircraft at an arrival location. The gross weight determination control unit is configured to compare the accurate gross weight of the aircraft with the maximum weight threshold to determine if the aircraft is in an overweight condition.

In at least one example, the gross weight determination control unit ignores first data gaps in the first source, and ignores second data gaps in the second source. The gross weight determination control unit combines accurate gross weight data from the first source and the second source to determine the accurate gross weight of the aircraft.

Certain examples of the present disclosure provide an aircraft landing weight determination method that is configured to determine an accurate gross weight of an aircraft. The aircraft landing weight determination method includes determining, by a gross weight determination control unit, an accurate gross weight of an aircraft based on a first source of gross weight data of the aircraft and a second source of gross weight data of the aircraft.

In at least one example, the determining includes comparing a gross weight 1 to a maximum weight threshold in response to determining that the gross weight 1 is not constant during at least a portion of a flight, comparing a gross weight 2 to the maximum weight threshold in response to determining that the gross weight 1 is constant and the gross weight 2 is not constant during at least a portion of a flight, and determining that the aircraft is in an overweight condition when the gross weight 1 or the gross weight 2 exceeds the maximum weight threshold.

The determining may include determining the accurate gross weight of the aircraft at any point during a flight of the aircraft between a departure gate at a departure location and an arrival gate at an arrival location.

The aircraft landing weight determination method may also include predicting, by the gross weight determination control unit, a gross weight of the aircraft at an arrival location before landing based on the accurate gross weight of the aircraft.

In at least one example, the determining includes ignoring first data gaps in the first source, ignoring second data gaps in the second source, combining accurate gross weight data from the first source and the second source, and determining the accurate gross weight of the aircraft based on the combining.

### BRIEF DESCRIPTION OF THE DRAWINGS

Figure 1 illustrates a simplified representation of an aircraft traveling from a departure gate to an arrival gate.
Figure 2 illustrates a schematic box diagram of an aircraft landing weight determination system, according to an example of the present disclosure.
Figure 3 illustrates graphs of altitude, phase, gross weight 1, and gross weight 2 of the aircraft over time.
Figure 4 illustrates graphs of gross weight 1 and gross weight 2 of the aircraft over time.
Figure 5 illustrates a flow chart of an aircraft landing weight determination method, according to an example of the present disclosure.
Figure 6 is a diagrammatic representation of a front perspective view of an aircraft, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one embodiment" (or "one example") are not intended to be interpreted as excluding the existence of additional examples that also incorporate the recited features. Moreover, unless explicitly stated to the contrary, examples "comprising" or "having" an element or a plurality of elements having a particular condition may include additional elements not having that condition.

Certain examples of the present disclosure provide an aircraft landing weight determination system that is configured to obtain real time aircraft weight inputs including gross weight 1 (initially determined or otherwise initially established when the aircraft is on the ground) and gross weight 2 (determined when the aircraft is in the air with no weight on wheels). The two aircraft weight inputs, namely gross weight 1 and gross weight 2, are combined to derive an accurate estimate of aircraft weight, and/or an accurate fuel quantity measurement. In at least one example, a pilot may take remedial action (such as flying via a different flight path to the arrival location) to ensure that the aircraft complies with governmental and airport regulations and restrictions upon landing.

Certain examples of the present disclosure provide systems and methods for monitoring and evaluating aircraft weight. In at least one example, the systems and methods include receiving two sources of aircraft weight data. A first source is gross weight 1, which includes pre-flight and taxi data. A second source is gross weight 2, which includes in-flight data. The first source and the second source are both analyzed to determine an accurate gross weight of the aircraft, whether in flight or on the ground.

As described herein, certain examples of the present disclosure provide an aircraft landing weight determination system that includes a gross weight determination control unit that is configured to determine an accurate gross weight of an aircraft based on a first source of gross weight data of the aircraft and a second source of gross weight data of the aircraft. The first source of gross weight data may be gross weight 1, and the second source of gross weight data may be gross weight 2. In at least one example, the gross weight determination control unit is configured to analyze the gross weight 1 and the gross weight 2 for the aircraft, such as at any point during a flight. The gross weight determination control unit is configured to determine an accurate gross weight of the aircraft based on one or both of the gross weight 1 and the gross weight 2. In at least one example, the gross weight determination control unit predicts a gross weight of the aircraft at an arrival location before landing based on the accurate gross weight of the aircraft. That is, the gross weight determination control unit may determine the accurate gross weight of the aircraft at any point during a flight before landing at the arrival location, and use the accurate gross weight to predict the gross weight of the aircraft upon landing.

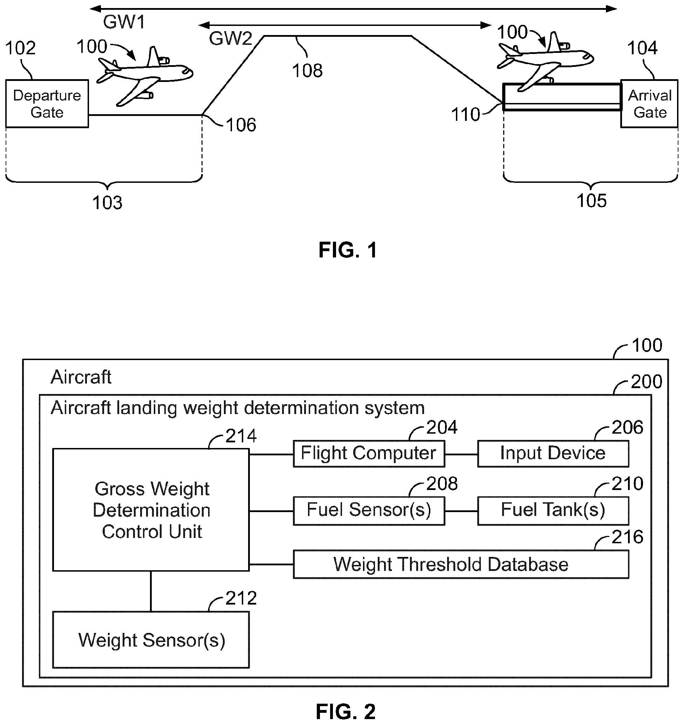

Figure 1 illustrates a simplified representation of an aircraft 100 traveling from a departure gate 102 to an arrival gate 104. The departure gate 102 is at a departure location 103 (such as a first airport) that includes taxiway(s), runway(s), and the like. The arrival gate 104 is at an arrival location 105 (such as a second airport) that includes taxiway(s), runway(s), and the like. At the departure gate 102, crew, passengers, cargo, freight, and/or the like are boarded onto the aircraft 100. At a scheduled time, the aircraft 100 pushes back from the departure gate 102 and taxis on the ground to a runway, at which point the aircraft 100 takes off at point 106, at which the wheels of the aircraft are no longer on the ground. The aircraft 100 ascends to a cruising altitude 108 and descends towards the arrival location 105, at which point the aircraft touches down at point 110, at which the wheels of the aircraft 100 are on the ground. The aircraft 100 then taxis to the arrival gate 104, where the passengers, and crew may depart the aircraft 100.

A first source of aircraft weight is gross weight 1 (GW1). Gross weight 1 for the aircraft is determined from the departure gate 102 before the aircraft pushes back from the departure gate 102 to the arrival gate 104, and includes the time that the aircraft 100 is airborne, that is, in the air (off the ground), between points 106 and 110. In at least one example, the pilot inputs the gross weight 1 of the aircraft 100 before pushing back from the departure gate 102. Gross weight 1 is calculated as an initial gross weight at the departure gate 102 minus fuel burn during the flight.

As noted, the pilot inputs the gross weight 1 at the beginning of the flight (such as at the departure gate 102, before pushback therefrom), and is then assumed constant during the entirety of the flight. For example, based on the flight path and time of flight between points 106 and 110, a fuel burn is determined. Based on the determined fuel burn, the fuel weight between the points 106 and 110 is determined. As such, gross weight 1 is based on input from the pilot, and assumes a constant decrease in weight during the in-air phases of the flight.

A second source of aircraft weight is gross weight 2 (GW2). Unlike gross weight 1, gross weight 2 is not dependent upon pilot input. Gross weight 2 is determined from actual flight data between the points 106 and 110 (when the aircraft 100 is off the ground). In at least one example, gross weight 2 is determined when there is no weight on wheels of the aircraft 100 (that is, when the aircraft 100 is off the ground and in the air). Gross weight 2 is a complex calculation with different tables. Gross weight 2 is an accurate measure of gross weight of the aircraft 100 while in the air. In at least one example, gross weight 2 is determined from fuel sensors on board the plane, weight sensors, engine operation and output, and/or the like. Unlike gross weight 1, gross weight 2 does not assume a constant fuel burn during the flight.

Figure 2 illustrates a schematic box diagram of an aircraft landing weight determination system 200, according to an example of the present disclosure. The aircraft 100 includes a flight computer 204 in communication with an input device 206, such as through one or more wired or wireless connections. The input device 206 may be or include a keyboard, mouse, touchscreen interface, and/or the like. The flight computer 204 stores flight data between the departure gate 102 and the arrival gate 104 (shown in Figure 1). The flight data includes the flight path between the points 106 and 110 (shown in Figure 1), as well as altitudes, airspeeds, and the like for the aircraft 100 during the flight.

The aircraft 100 also includes one or more fuel sensors 208 in communication with one or more fuel tanks 210. The fuel sensor(s) 208 may be on or within the fuel tank(s) 210 and are configured to determine an amount of fuel within the fuel tank(s) 210.

In at least one example, the aircraft 100 also includes one or more weight sensor(s) 212. The weight sensor(s) 212 are configured to detect a gross weight of the aircraft 100.

The aircraft landing weight determination system 200 may be onboard the aircraft 100 or may be remotely located from the aircraft 100. In at least one example, the aircraft landing weight determination system 200 is onboard the aircraft 100.

The aircraft landing weight determination system 200 includes a gross weight determination control unit 214 that is in communication with the flight computer 204, the fuel sensor(s) 208, the weight sensor(s) 212, and a weight threshold database 216, such as through one or more wired or wireless connections. As shown, the gross weight determination control unit 214 is onboard the aircraft 100. In at least one example, the gross weight determination control unit 214 is separate and distinct from the flight computer 204. In at least one other example, the gross weight determination control unit 214 is part of the flight computer 204. For example, the flight computer 204 may include the gross weight determination control unit 214.

The weight threshold database 216 stores landing weight thresholds (for example, a maximum weight threshold) for the aircraft 100 (and optionally for various other aircraft) at the arrival location 105 (shown in Figure 1). A landing weight threshold is a gross weight magnitude at or above which the aircraft 100 is determined to be in an overweight condition at the arrival location 105.

As shown, the gross weight determination control unit 214 and the weight threshold database 216 may both be onboard the aircraft 100. In at least one other example, one or both of the gross weight determination control unit 214 and the weight threshold database 216 may be remotely located from the aircraft 100. For example, the gross weight determination control unit 214 and/or the weight threshold database 216 may be at a central monitoring location (such as at an airport) and in communication with the aircraft 100.

Referring to Figures 1 and 2, in operation, a pilot of the aircraft 100 inputs an initial gross weight of the aircraft 100 into the flight computer 204 via the input device 206. The initial gross weight is determined through the weight sensor(s) 212, the fuel sensor(s) 208, and/or the like. For example, the initial gross weight is the gross weight of the aircraft 100 at the departure gate 102 including the weight of the aircraft 100 itself, plus the weight of the fuel within the fuel tanks(s) 210, passengers, freight, and the like. In at least one example, the initial gross weight is automatically determined and input into the flight computer 204 via the weight sensor(s) 212 and the fuel sensor(s) 208 without manual input.

The gross weight determination control unit 214 receives gross weight 1 data to determine the gross weight 1 of the aircraft 100, such as at any point during the flight of the aircraft 100. For example, the gross weight determination control unit 214 receives the initial gross weight of the aircraft 100 (whether input by a pilot or automatically determined via the weight sensor(s) 212 and the fuel sensor(s) 208) and analyzes the flight plan for the aircraft 100 between the departure gate 102 and the arrival gate 104. The gross weight determination control unit 214 determines the fuel burn of the aircraft 100 based on the flight plan. The gross weight determination control unit 214 then determines gross weight 1 based on the initial gross weight of the aircraft 100 and the fuel burn. The gross weight determination control unit 214 is configured to determine the gross weight 1 of the aircraft 100 at any point between the departure gate 102 and the arrival gate 104 based on subtracting the fuel burn from the initial gross weight.

The gross weight determination control unit 214 also receives gross weight 2 data to determine the gross weight 2 of the aircraft 100, such as at any point during the flight of the aircraft 100. For example, the gross weight determination control unit 214 receives weight data from the weight sensor(s) 212, fuel data from the fuel sensor(s) 208, and/or the like during the in-air phases of the flight of the aircraft 100 between points 106 and 110. As such, the gross weight determination control unit 214 determines actual fuel burn and weight of the aircraft 100, instead of assuming a constant fuel burn based on the flight data stored in the flight computer 204. In this manner, the gross weight determination control unit 214 also determines gross weight 2.

The gross weight determination control unit 214 analyzes both gross weight 1 and gross weight 2 at any point during the flight between the departure gate 102 and the arrival gate 104 to determine an accurate gross weight of the aircraft 100 at such point in the flight, as well as make an accurate prediction of the gross weight of the aircraft 100 when the aircraft 100 lands at point 110 at the arrival location 105. In this manner, the gross weight determination control unit 214 does not rely solely on gross weight 1 or gross weight 2 to determine the gross weight of the aircraft 100 at the arrival location 105. Instead, the gross weight determination control unit 214 generates an accurate gross weight determination and prediction based on both gross weight 1 and gross weight 2 of the aircraft 100.

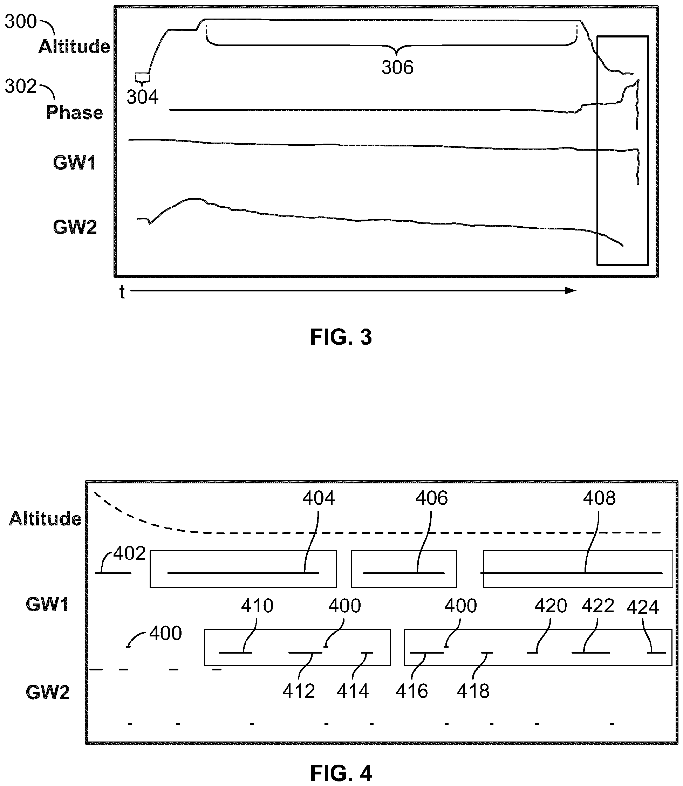

Figure 3 illustrates graphs of altitude 300, phase 302, gross weight 1 (GW1), and gross weight 2 (GW2) of the aircraft 100 (shown in Figures 1 and 2) over time t. As shown, the altitude 300 of the aircraft 100 differs at different phases. For example, the altitude 300 at a taxi and takeoff phase 304 is at ground level, while the altitude 300 may be relatively constant during a cruising phase 306.

As shown, gross weight 1 may assume a constant fuel burn from departure until landing. Conversely, gross weight 2 provides varying fuel burn determinations between departure and landing, due to actual detection of weight parameters (such as fuel burn) during in-air phases of a flight.

Figure 4 illustrates graphs of gross weight 1 and gross weight 2 of the aircraft 100 (shown in Figure 1 and 2) over time. As shown, both gross weight 1 and gross weight 2 may include data gaps 400 during a flight of the aircraft 100. For example, during a flight, the fuel burn may not be constant (that is, a constant slope indicating a constant and steady fuel burn). Further, during a flight, sensor data may not accurately output fuel burn. For example, during particular maneuvers (such as ascents, descents, banks, and the like) the fuel sensor(s) 208 may not accurately detect the fuel within the fuel tank(s) 210 (shown in Figure 1), such as when fuel is shifted to a side of a fuel tank during a bank.

Referring to Figures 1, 2, and 4, in at least one example, the gross weight determination control unit 214 determines the total gross weight of the aircraft 100 at a current time and a future time (such as when the aircraft lands at the arrival location 105) based on accurate data from gross weight 1 and gross weight 2. For example, the gross weight determination control unit 214 detects accurate gross weight data 402, 404, 406, and 408 from gross weight 1 during various phases of the flight. The gross weight determination control unit 214 ignores the data gaps 400 within the gross weight 1. Similarly, the gross weight determination control unit 214 detects accurate gross weight data 410-424 from gross weight 2 during various phases of the flight. The gross weight determination control unit 214 ignores the data gaps 400 within the gross weight 2. The gross weight determination control unit 214 combines the accurate data 402, 404, 406, and 408 from gross weight 1 and the accurate data 410-424 from gross weight 2 to determine an accurate gross weight of the aircraft 100 at any point during the flight.

The gross weight determination control unit 214 may also use the accurate gross weight of the aircraft 100 to predict a landing weight of the aircraft 100 (such as at point 110 at the arrival location). For example, the gross weight determination control unit 214 may determine the accurate gross weight of the aircraft 100, based on accurate data from gross weight 1 and accurate data from gross weight 2, determine a remaining length of the flight on the flight plan stored in the flight computer 204, and subtract a predicted weight of fuel that is to be burned (that is, a predicted fuel burn) for the remaining duration of the flight to predict the landing weight of the aircraft 100.

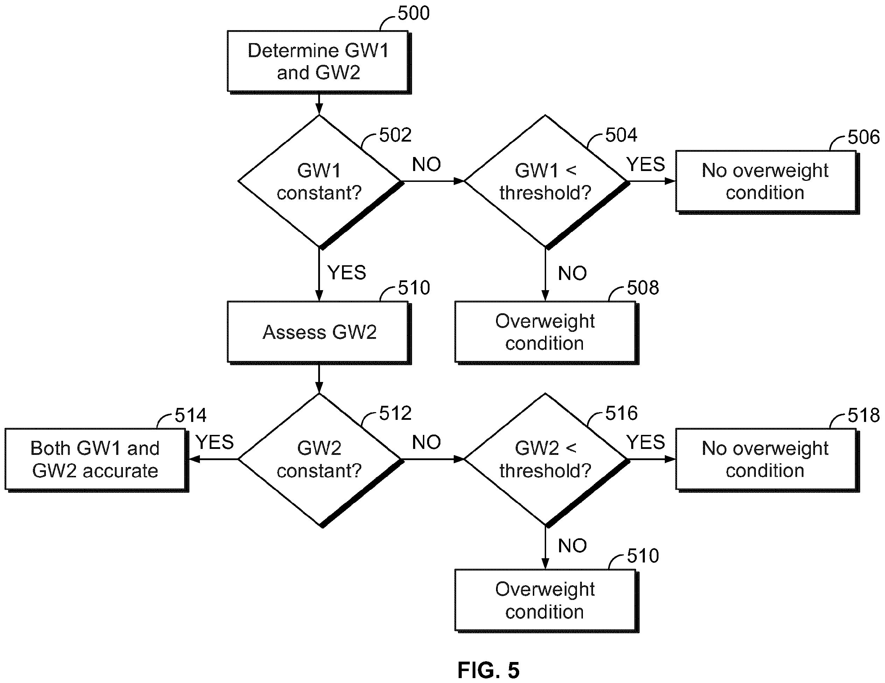

Figure 5 illustrates a flow chart of an aircraft landing weight determination method, according to an example of the present disclosure. Referring to Figures 1-5, the gross weight determination control unit 214 determines gross weight 1 and gross weight 2 at 500 at any point during a flight from the departure gate 102 to the arrival gate 104. As described above, the gross weight 1 is determined based on aircraft weight data input from the pilot and/or automatically through one or more sensors of the aircraft. The gross weight determination control unit 214 then determines gross weight 1 for the aircraft 100 by subtracting a lost fuel weight as determined from a predicted fuel burn for the flight, as determined from the flight plan stored in the flight computer 204, from the aircraft weight data as determined at the departure gate 102.

The gross weight 2 is determined from actual data output by various sensors of the aircraft 100 during an in-air portion of the flight of the aircraft, such as between points 106 and 110. The gross weight determination control unit 214 may determine the gross weight 1 and gross weight 2 at any point during the flight, and analyze a remaining flight time and flight path of the aircraft to the arrival location 105 to predict a the gross weight 1 and gross weight 2 at the arrival location 105.

At 502, the gross weight determination control unit 214 determines if the gross weight 1 is constant up until the particular point in the flight (such as at a particular time of a phase of the flight). In at least one example, the gross weight determination control unit 214 determines that the gross weight 1 is constant if there are no data gaps in the gross weight 1 and/or the slope of the gross weight 1 (that is, the decreasing slope, as the weight of the aircraft necessarily decreases as fuel is burn) is constant. If the gross weight 1 is not constant at 502, the gross weight determination control unit 214 determines if the gross weight 1 of the aircraft 100 (whether at the current point in the flight, or at the arrival location 105) is less than a maximum weight threshold for the aircraft 100 as stored in the weight threshold database 216. If the gross weight 1 is less than the maximum weight threshold, the gross weight determination control unit 214 determines that no overweight condition is present at 506. If, however, the gross weight 1 is equal to or greater than the maximum weight threshold, the gross weight determination control unit 214 determines an overweight condition at 508, and may output an overweight condition alert to the pilot of the aircraft 100, such as through one or more graphical, video, and/or audio messages.

If, at 502, the gross weight 1 is constant, the method proceeds to 510, at which the gross weight 2 is assessed. At 512, the gross weight determination control unit 214 determines if the gross weight 2 is constant. If the gross weight 2 is constant (as well as the gross weight 1 being constant), then at 514 the gross weight determination control unit 214 determines that both gross weight 1 and gross weight 2 are both accurate. As such, either the gross weight 1 or the gross weight 2 may be used to provide an accurate determination and/or prediction of gross weight of the aircraft 100.

If, however, the gross weight 2 is not constant at 512, the method proceeds to 516, at which the gross weight determination control unit 214 determines whether the gross weight 2 is less than the maximum weight threshold, as stored in the weight threshold database 216. If the gross weight 2 is less than the maximum weight threshold, the method proceeds to 518, at which the gross weight determination control unit 214 determines that no overweight condition is present. If, however, the gross weight 2 is equal to or greater than the maximum weight threshold at 516, the gross weight determination control unit 214 determines an overweight condition at 520, and may then output an overweight condition alert to the pilot of the aircraft 100.

In response to receiving an overweight condition alert from the gross weight determination control unit 214, a pilot may take remedial action(s) to ensure that the aircraft is under the maximum weight threshold at the arrival location 105. For example, the pilot may request from air traffic control to be placed in a holding pattern to burn additional fuel before landing so that the aircraft 100 is under the maximum weight threshold upon landing. As another example, the pilot may request from air traffic control an alternate (for example, longer) route to the arrival location so that additional fuel is burned before landing.

In at least one example, an aircraft landing weight determination method is configured to determine an accurate gross weight of an aircraft. The aircraft landing weight determination method includes determining, by the gross weight determination control unit 214 an accurate gross weight of an aircraft based on a first source of gross weight data of the aircraft and a second source of gross weight data of the aircraft. In at least one example, the first source of gross weight data is gross weight 1, and the second source of gross weight data is gross weight 2.

In at least one example, the determining includes comparing the gross weight 1 to a maximum weight threshold in response to determining that the gross weight 1 is not constant during at least a portion of a flight, comparing the gross weight 2 to the maximum weight threshold in response to determining that the gross weight 1 is constant and the gross weight 2 is not constant during at least a portion of a flight, and determining that the aircraft is in an overweight condition when the gross weight 1 or the gross weight 2 exceeds the maximum weight threshold. The determining may include determining the accurate gross weight of the aircraft at any point during a flight of the aircraft between a departure gate at a departure location and an arrival gate at an arrival location. In at least one example, the aircraft landing weight determination method also includes predicting, by the gross weight determination control unit 214, a gross weight of the aircraft at an arrival location before landing based on the accurate gross weight of the aircraft.

In at least one example, the determining includes ignoring first data gaps in the first source, ignoring second data gaps in the second source, combining accurate gross weight data from the first source and the second source, and determining the accurate gross weight of the aircraft based on the combining.

As used herein, the term "control unit," "central processing unit," "unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the gross weight determination control unit 214 may be or include one or more processors that are configured to control operation thereof, as described herein.

The gross weight determination control unit 214 is configured to execute a set of instructions that are stored in one or more data storage units or elements (such as one or more memories), in order to process data. For example, the gross weight determination control unit 214 may include or be coupled to one or more memories. The data storage units may also store data or other information as desired or needed. The data storage units may be in the form of an information source or a physical memory element within a processing machine.

The set of instructions may include various commands that instruct the gross weight determination control unit 214 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the gross weight determination control unit 214. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the gross weight determination control unit 214 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

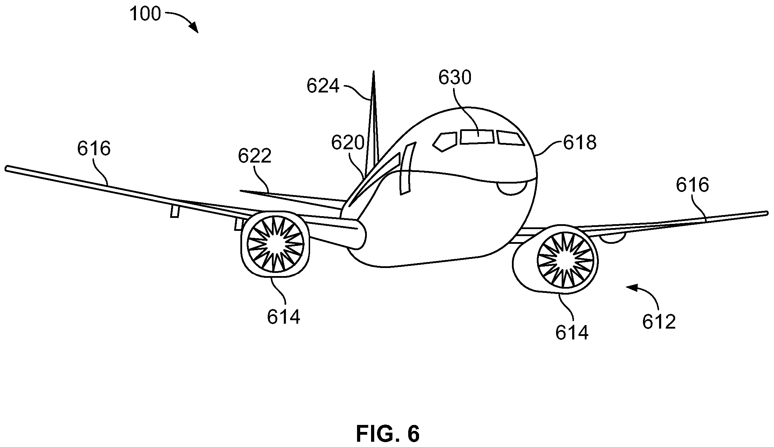

Figure 6 is a diagrammatic representation of a front perspective view of the aircraft 100, according to an exemplary example of the present disclosure. The aircraft 100 includes a propulsion system 612 that may include two turbofan engines 614, for example. Optionally, the propulsion system 612 may include more engines 614 than shown. The engines 614 are carried by wings 616 of the aircraft 100. In other examples, the engines 614 may be carried by a fuselage 618 and/or an empennage 620. The empennage 620 may also support horizontal stabilizers 622 and a vertical stabilizer 624. The fuselage 618 of the aircraft 100 defines an internal cabin, which may include a cockpit 630.

The aircraft 100 may be sized, shaped, and configured other than shown in Figure 6. For example, the aircraft 100 may be a non-fixed wing aircraft, such as a helicopter. As another example, the aircraft 100 may be an unmanned aerial vehicle (UAV).

As described herein, examples of the present disclosure provide systems and methods for accurately estimating and determining a gross weight of an aircraft. Further, examples of the present disclosure provide systems and methods that allow an aircraft operator to confidently predict a gross weight of an aircraft at an arrival location. Moreover, examples of the present disclosure provide systems and methods for accurately determining a gross weight of an aircraft during a flight and predict the gross weight upon landing.

While various spatial and directional terms, such as top, bottom, lower, mid, lateral, horizontal, vertical, front and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) may be used in combination with each other. In addition, many modifications may be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

## Claims

1. An aircraft (100) landing weight determination system that is configured to determine an accurate gross weight of an aircraft (100), the aircraft (100) landing weight determination system comprising:
a gross weight determination control unit that is configured to determine an accurate gross weight of an aircraft (100) at a point (106, 110) during a flight between a departure gate (102) at a departure location (103) and an arrival gate (104) at the arrival location (105) based on a first source of gross weight data (GW1) of the aircraft (100), and a second source of gross weight data (GW2) of the aircraft (100) determined from measurements in the flight, including measurement from one or more onboard fuel sensors;
**characterized in that**
the first source of gross weight data is a first gross weight based on pilot input of the departure gate gross weight when the aircraft (100) is at the departure gate (102) minus fuel weight determined based on a calculated fuel burn between the departure gate (102) and the point assuming a constant decrease in weight during flight,
wherein the gross weight determination control unit is configured to:
compare the first gross weight to a maximum weight threshold in response to determining that the first gross weight is not constant during at least a portion of the flight to determine if the aircraft (100) is in an overweight condition; wherein determining that the first gross weight is not constant comprises determining a decreasing slope of the first gross weight as fuel is burned is not constant; and
compare the second gross weight to the maximum weight threshold in response to determining that the first gross weight is constant and the second gross weight is not constant during at least a portion of the flight to determine if the aircraft (100) is in an overweight condition; and
determine that the aircraft (100) is in an overweight condition when the first gross weight or the second gross weight exceed the maximum weight threshold.

2. The aircraft (100) landing weight determination system of claim 1, wherein the gross weight determination control unit at least one of:
determines the accurate gross weight of the aircraft (100) at any point (106, 110) during a flight of the aircraft (100) between a departure gate (102) at a departure location (103) and an arrival gate (104) at an arrival location (105), or
predicts a gross weight of the aircraft (100) at an arrival location (105) before landing based on the accurate gross weight of the aircraft (100).

3. The aircraft (100) landing weight determination system of any one of claims 1-2, further comprising a flight computer (204) in communication with the gross weight determination control unit, wherein the flight computer (204) stores flight data for the aircraft (100).

4. The aircraft (100) landing weight determination system of any one of claim 1-3, wherein the one or more fuel sensors (208) are in communication with the gross weight determination control unit, wherein the one or more fuel sensors (208) are configured to determine an amount of fuel onboard the aircraft (100).

5. The aircraft (100) landing weight determination system of any one of claim 1-4, further comprising one or more weight sensors in communication with the gross weight determination control unit, wherein the one or more weight sensors are configured to detect a gross weight of the aircraft (100).

6. The aircraft (100) landing weight determination system of any one of claim 1-5, further comprising a weight threshold database (216) in communication with the gross weight determination control unit, wherein the weight threshold database (216) stores the maximum weight threshold for the aircraft (100) at the arrival location (105), and wherein the gross weight determination control unit is configured to compare the accurate gross weight of the aircraft (100) with the maximum weight threshold to determine if the aircraft (100) is in an overweight condition.

7. The aircraft (100) landing weight determination system of any one of claim 1-6, wherein the gross weight determination control unit ignores first data gaps (400) in the first source, wherein the gross weight determination control unit ignores second data gaps (400) in the second source, and wherein the gross weight determination control unit combines accurate gross weight data from the first source and the second source to determine the accurate gross weight of the aircraft (100).

8. The aircraft (100) landing weight determination system of any one of claims 1-7, wherein the departure gate is at a departure location comprising a taxiway.

9. The aircraft (100) landing weight determination system of any one of claims 1-7, wherein the departure gate is at a departure location comprising a runway.

10. The aircraft (100) landing weight determination system of any one of claims 1-9, wherein the aircraft comprises a non-fixed wing aircraft, a helicopter, or an unmanned aerial vehicle (UAV).

11. An aircraft (100) landing weight determination method that is configured to determine an accurate gross weight of an aircraft (100), the aircraft (100) landing weight determination method comprising:
determining, by a gross weight determination control unit, an accurate gross weight of an aircraft (100) at any point (106, 110) during a flight between a departure gate (102) at a departure location (103) and an arrival gate (104) at the arrival location (105) based on a first source of gross weight data (GW1) of the aircraft (100), and a second source of gross weight data (GW2) of the aircraft (100) determined from measurements in the flight, including measurement from one or more onboard fuel sensors, wherein the first source of gross weight data is a first gross weight based on pilot input of the departure gate gross weight when the aircraft (100) is at the departure gate (102) minus fuel weight determined based on a calculated fuel burn between the departure gate (102) and the point assuming a constant decrease in weight during flight, wherein the determining comprises:
comparing the first gross weight to a maximum weight threshold in response to determining that the first gross weight is not constant during at least a portion of the flight wherein determining that the first gross weight is not constant comprises determining a decreasing slope of the first gross weight as fuel is burned is not constant;
comparing the second gross weight to the maximum weight threshold in response to determining that the first gross weight is constant and the second gross weight is not constant during at least a portion of the flight; and
determining that the aircraft (100) is in an overweight condition when the first gross weight or the second gross weight exceeds the maximum weight threshold.

12. The aircraft (100) landing weight determination method of claim 11, wherein the determining comprises determining the accurate gross weight of the aircraft (100) at any point (106, 110) during a flight of the aircraft (100) between a departure gate (102) at a departure location (103) and an arrival gate (104) at the arrival location (105).

13. The aircraft (100) landing weight determination method of claim 11, further comprising predicting, by the gross weight determination control unit, a gross weight of the aircraft (100) at the arrival location (105) before landing based on the accurate gross weight of the aircraft (100).

14. The aircraft (100) landing weight determination method of claim 11, wherein the determining comprises:
ignoring first data gaps (400) in the first source;
ignoring second data gaps (400) in the second source;
combining accurate gross weight data from the first source and the second source; and
determining the accurate gross weight of the aircraft (100) based on the combining.

15. The aircraft (100) landing weight determination method of any of claims 11-14 in which the gross weight determination control unit determines that the first gross weight is constant if there are no data gaps in the first gross weight.

## Patentansprüche

1. System zur Bestimmung eines Landegewichts eines Flugzeugs (100), das dazu ausgelegt ist, ein genaues Bruttogewicht eines Flugzeugs (100) zu bestimmen, wobei das System zur Bestimmung eines Landegewichts eines Flugzeugs (100) umfasst:
eine Bruttogewichtsbestimmungssteuereinheit, die dazu ausgelegt ist, ein genaues Bruttogewicht eines Flugzeugs (100) an einem Punkt (106, 110) während eines Flugs zwischen einem Abflug-Gate (102) an einem Abflugort (103) und einem Ankunfts-Gate (104) an dem Ankunftsort (105) basierend auf einer ersten Quelle von Bruttogewichtsdaten (GW1) des Flugzeugs (100) und einer zweiten Quelle von Bruttogewichtsdaten (GW2) des Flugzeugs (100), die aus Messungen im Flug, einschließlich einer Messung von einem oder mehreren an Bord befindlichen Treibstoffsensor(en), bestimmt werden, zu bestimmen;
**dadurch gekennzeichnet, dass**
die erste Quelle von Bruttogewichtsdaten ein erstes Bruttogewicht ist, das auf einer Piloteneingabe des Abflug-Gate-Bruttogewichts, wenn sich das Flugzeug (100) an dem Abflug-Gate (102) befindet, minus einem Treibstoffgewicht, das basierend auf einem berechneten Treibstoffverbrauch zwischen dem Abflug-Gate (102) und dem Punkt unter Annahme einer konstanten Gewichtsabnahme während des Flugs bestimmt wird, basiert,
wobei die Bruttogewichtsbestimmungssteuereinheit ausgelegt ist zum:
Vergleichen des ersten Bruttogewichts mit einer Höchstgewichtsschwelle als Reaktion auf das Bestimmen, dass das erste Bruttogewicht während mindestens eines Abschnitts des Flugs nicht konstant ist, um zu bestimmen, ob sich das Flugzeug (100) in einem Übergewichtszustand befindet; wobei das Bestimmen, dass das erste Bruttogewicht nicht konstant ist, ein Bestimmen umfasst, dass eine negative Steigung des ersten Bruttogewichts, während Treibstoff verbraucht wird, nicht konstant ist; und
Vergleichen des zweiten Bruttogewichts mit der Höchstgewichtsschwelle als Reaktion auf das Bestimmen, dass das erste Bruttogewicht konstant ist und das zweite Bruttogewicht während mindestens eines Abschnitts des Flugs nicht konstant ist, um zu bestimmen, ob sich das Flugzeug (100) in einem Übergewichtszustand befindet; und
Bestimmen, dass sich das Flugzeug (100) in einem Übergewichtszustand befindet, wenn das erste Bruttogewicht oder das zweite Bruttogewicht die Höchstgewichtsschwelle überschreitet.

2. System zur Bestimmung eines Landegewichts eines Flugzeugs (100) nach Anspruch 1, wobei die Bruttogewichtsbestimmungssteuereinheit mindestens eines durchführt von:
Bestimmen des genauen Bruttogewichts des Flugzeugs (100) an einem beliebigen Punkt (106, 110) während eines Flugs des Flugzeugs (100) zwischen einem Abflug-Gate (102) an einem Abflugort (103) und einem Ankunfts-Gate (104) an einem Ankunftsort (105) oder
Vorhersagen eines Bruttogewichts des Flugzeugs (100) an einem Ankunftsort (105) vor der Landung basierend auf dem genauen Bruttogewicht des Flugzeugs (100).

3. System zur Bestimmung eines Landegewichts eines Flugzeugs (100) nach einem der Ansprüche 1-2, ferner umfassend einen Flugcomputer (204) in Kommunikation mit der Bruttogewichtsbestimmungssteuereinheit, wobei der Flugcomputer (204) Flugdaten für das Flugzeug (100) speichert.

4. System zur Bestimmung eines Landegewichts eines Flugzeugs (100) nach einem der Ansprüche 1-3, wobei der eine oder die mehreren Treibstoffsensor(en) (208) in Kommunikation mit der Bruttogewichtsbestimmungssteuereinheit ist/sind, wobei der eine oder die mehreren Treibstoffsensor(en) (208) dazu ausgelegt ist/sind, eine Treibstoffmenge an Bord des Flugzeugs (100) zu bestimmen.

5. System zur Bestimmung eines Landegewichts eines Flugzeugs (100) nach einem der Ansprüche 1-4, ferner umfassend einen oder mehrere Gewichtssensor(en) in Kommunikation mit der Bruttogewichtsbestimmungssteuereinheit, wobei der eine oder die mehreren Gewichtssensor(en) dazu ausgelegt ist/sind, ein Bruttogewicht des Flugzeugs (100) zu ermitteln.

6. System zur Bestimmung eines Landegewichts eines Flugzeugs (100) nach einem der Ansprüche 1-5, ferner umfassend eine Gewichtsschwellendatenbank (216) in Kommunikation mit der Bruttogewichtsbestimmungssteuereinheit, wobei die Gewichtsschwellendatenbank (216) die Höchstgewichtsschwelle für das Flugzeug (100) an dem Ankunftsort (105) speichert und wobei die Bruttogewichtsbestimmungssteuereinheit dazu ausgelegt ist, das genaue Bruttogewicht des Flugzeugs (100) mit der Höchstgewichtsschwelle zu vergleichen, um zu bestimmen, ob sich das Flugzeug (100) in einem Übergewichtszustand befindet.

7. System zur Bestimmung eines Landegewichts eines Flugzeugs (100) nach einem der Ansprüche 1-6, wobei die Bruttogewichtsbestimmungssteuereinheit erste Datenlücken (400) in der ersten Quelle ignoriert, wobei die Bruttogewichtsbestimmungssteuereinheit zweite Datenlücken (400) in der zweiten Quelle ignoriert und wobei die Bruttogewichtsbestimmungssteuereinheit genaue Bruttogewichtsdaten von der ersten Quelle und der zweiten Quelle kombiniert, um das genaue Bruttogewicht des Flugzeugs (100) zu bestimmen.

8. System zur Bestimmung eines Landegewichts eines Flugzeugs (100) nach einem der Ansprüche 1-7, wobei sich das Abflug-Gate an einem Abflugort befindet, der einen Rollweg umfasst.

9. System zur Bestimmung eines Landegewichts eines Flugzeugs (100) nach einem der Ansprüche 1-7, wobei sich das Abflug-Gate an einem Abflugort befindet, der eine Landebahn umfasst.

10. System zur Bestimmung eines Landegewichts eines Flugzeugs (100) nach einem der Ansprüche 1-9, wobei das Flugzeug ein Flugzeug ohne Starrflügel, einen Hubschrauber oder ein unbemanntes Luftfahrzeug (UAV) umfasst.

11. Verfahren zur Bestimmung eines Landegewichts eines Flugzeugs (100), das dazu ausgelegt ist, ein genaues Bruttogewicht eines Flugzeugs (100) zu bestimmen, wobei das Verfahren zur Bestimmung eines Landegewichts eines Flugzeugs (100) umfasst:
Bestimmen, durch eine Bruttogewichtsbestimmungssteuereinheit, eines genauen Bruttogewichts eines Flugzeugs (100) an einem beliebigen Punkt (106, 110) während eines Flugs zwischen einem Abflug-Gate (102) an einem Abflugort (103) und einem Ankunfts-Gate (104) an dem Ankunftsort (105) basierend auf einer ersten Quelle von Bruttogewichtsdaten (GW1) des Flugzeugs (100) und einer zweiten Quelle von Bruttogewichtsdaten (GW2) des Flugzeugs (100), die aus Messungen im Flug, einschließlich einer Messung von einem oder mehreren an Bord befindlichen Treibstoffsensor(en), bestimmt werden, wobei die erste Quelle von Bruttogewichtsdaten ein erstes Bruttogewicht ist, das auf einer Piloteneingabe des Abflug-Gate-Bruttogewichts, wenn sich das Flugzeug (100) an dem Abflug-Gate (102) befindet, minus einem Treibstoffgewicht, das basierend auf einem berechneten Treibstoffverbrauch zwischen dem Abflug-Gate (102) und dem Punkt unter Annahme einer konstanten Gewichtsabnahme während des Flugs bestimmt wird, basiert, wobei das Bestimmen umfasst:
Vergleichen des ersten Bruttogewichts mit einer Höchstgewichtsschwelle als Reaktion auf das Bestimmen, dass das erste Bruttogewicht während mindestens eines Abschnitts des Flugs nicht konstant ist, wobei das Bestimmen, dass das erste Bruttogewicht nicht konstant ist, ein Bestimmen umfasst, dass eine negative Steigung des ersten Bruttogewichts, während Treibstoff verbraucht wird, nicht konstant ist;
Vergleichen des zweiten Bruttogewichts mit der Höchstgewichtsschwelle als Reaktion auf das Bestimmen, dass das erste Bruttogewicht konstant ist und das zweite Bruttogewicht während mindestens eines Abschnitts des Flugs nicht konstant ist; und
Bestimmen, dass sich das Flugzeug (100) in einem Übergewichtszustand befindet, wenn das erste Bruttogewicht oder das zweite Bruttogewicht die Höchstgewichtsschwelle überschreitet.

12. Verfahren zur Bestimmung eines Landegewichts eines Flugzeugs (100) nach Anspruch 11, wobei das Bestimmen ein Bestimmen des genauen Bruttogewichts des Flugzeugs (100) an einem beliebigen Punkt (106, 110) während eines Flugs des Flugzeugs (100) zwischen einem Abflug-Gate (102) an einem Abflugort (103) und einem Ankunfts-Gate (104) an dem Ankunftsort (105) umfasst.

13. Verfahren zur Bestimmung des Landegewichts eines Flugzeugs (100) nach Anspruch 11, ferner umfassend ein Vorhersagen, durch die Bruttogewichtsbestimmungssteuereinheit, eines Bruttogewichts des Flugzeugs (100) an dem Ankunftsort (105) vor der Landung basierend auf dem genauen Bruttogewicht des Flugzeugs (100).

14. Verfahren zur Bestimmung des Landegewichts eines Flugzeugs (100) nach Anspruch 11, wobei das Bestimmen umfasst:
Ignorieren der ersten Datenlücken (400) in der ersten Quelle;
Ignorieren der zweiten Datenlücken (400) in der zweiten Quelle;
Kombinieren genauer Bruttogewichtsdaten von der ersten Quelle und der zweiten Quelle
und Bestimmen des genauen Bruttogewichts des Flugzeugs (100) basierend auf dem Kombinieren.

15. Verfahren zur Bestimmung des Landegewichts eines Flugzeugs (100) nach einem der Ansprüche 11-14, wobei die Bruttogewichtsbestimmungssteuereinheit bestimmt, dass das erste Bruttogewicht konstant ist, wenn keine Datenlücken im ersten Bruttogewicht bestehen.

## Revendications

1. Système de détermination du poids à l'atterrissage d'un aéronef (100) configuré pour déterminer le poids brut exact d'un aéronef (100), le système de détermination du poids à l'atterrissage d'un aéronef (100) comprenant :
une unité de commande de détermination du poids brut configurée pour déterminer le poids brut exact d'un aéronef (100) à tout moment (106, 110) pendant un vol entre une porte de départ (102) à un emplacement de départ (103) et une porte d'arrivée (104) à l'emplacement d'arrivée (105) sur la base d'une première source de données de poids brut (GW1) de l'aéronef (100) et d'une deuxième source de données de poids brut (GW2) de l'aéronef (100) déterminées à partir de mesures pendant le vol, y compris des mesures provenant d'un ou de plusieurs capteurs de carburant embarqués ;
**caractérisé en ce que** :
la première source de données de poids brut est un premier poids brut basé sur la saisie par le pilote du poids brut à la porte de départ lorsque l'aéronef (100) est à la porte de départ (102) moins le poids de carburant déterminé sur la base d'une consommation de carburant calculée entre la porte de départ (102) et le moment souhaité en supposant une diminution constante du poids pendant le vol,
où l'unité de commande de détermination du poids brut est configurée pour :
comparer le premier poids brut à un seuil de poids maximal en réponse à la détermination que le premier poids brut n'est pas constant pendant au moins une partie du vol pour déterminer si l'aéronef (100) est en surpoids ; où la détermination que le premier poids brut n'est pas constant comprend de déterminer qu'une pente décroissante du premier poids brut, au fur et à mesure que le carburant est consommé, n'est pas constante ; et
comparer le deuxième poids brut au seuil de poids maximal après avoir déterminé que le premier poids brut est constant et que le deuxième poids brut n'est pas constant pendant au moins une partie du vol afin de déterminer si l'aéronef (100) est en surcharge ; et
déterminer que l'aéronef (100) est en surcharge lorsque le premier poids brut ou le deuxième poids brut dépasse le seuil de poids maximal.

2. Système de détermination du poids à l'atterrissage d'un aéronef (100) selon la revendication 1, dans lequel l'unité de commande de détermination du poids brut exécute au moins l'une des actions suivantes :
la détermination du poids brut exact de l'aéronef (100) à tout moment (106, 110) au cours d'un vol de l'aéronef (100) entre une porte de départ (102) à un emplacement de départ (103) et une porte d'arrivée (104) à un emplacement d'arrivée (105), ou
la prédiction du poids brut de l'aéronef (100) à un point d'arrivée (105) avant l'atterrissage sur la base du poids brut exact de l'aéronef (100).

3. Système de détermination du poids à l'atterrissage d'un aéronef (100) selon l'une quelconque des revendications 1 et 2, comprenant en outre un ordinateur de vol (204) en communication avec l'unité de commande de détermination du poids brut, où l'ordinateur de vol (204) stocke les données de vol de l'aéronef (100).

4. Système de détermination du poids à l'atterrissage d'un aéronef (100) selon l'une quelconque des revendications 1 à 3, dans lequel les un ou plusieurs capteurs de carburant (208) sont en communication avec l'unité de commande de détermination du poids brut, où les un ou plusieurs capteurs de carburant (208) sont configurés pour déterminer une quantité de carburant à bord de l'aéronef (100).

5. Système de détermination du poids à l'atterrissage d'un aéronef (100) selon l'une quelconque des revendications 1 à 4, comprenant en outre un ou plusieurs capteurs de poids en communication avec l'unité de commande de détermination du poids brut, où les un ou plusieurs capteurs de poids sont configurés pour détecter un poids brut de l'aéronef (100).

6. Système de détermination du poids à l'atterrissage d'un aéronef (100) selon l'une quelconque des revendications 1 à 5, comprenant en outre une base de données de seuils de poids (216) en communication avec l'unité de commande de détermination du poids brut, où la base de données de seuils de poids (216) stocke le seuil de poids maximum pour l'aéronef (100) au lieu d'arrivée (105), et où l'unité de commande de détermination du poids brut est configurée pour comparer le poids brut exact de l'aéronef (100) avec le seuil de poids maximum pour déterminer si l'aéronef (100) est en surpoids.

7. Système de détermination du poids à l'atterrissage d'un aéronef (100) selon l'une quelconque des revendications 1 à 6, dans lequel l'unité de commande de la détermination du poids brut ignore les premiers écarts de données (400) dans la première source, où l'unité de commande de la détermination du poids brut ignore les deuxièmes écarts de données (400) dans la deuxième source, et où l'unité de commande de la détermination du poids brut combine les données de poids brut exact de la première source et de la deuxième source afin de déterminer le poids brut exact de l'aéronef (100).

8. Système de détermination du poids à l'atterrissage d'un aéronef (100) selon l'une quelconque des revendications 1 à 7, dans lequel la porte de départ se trouve à un emplacement de départ comprenant une voie de circulation.

9. Système de détermination du poids à l'atterrissage d'un aéronef (100) selon l'une quelconque des revendications 1 à 7, dans lequel la porte de départ se trouve à un emplacement de départ comprenant une piste.

10. Système de détermination du poids à l'atterrissage d'un aéronef (100) selon l'une quelconque des revendications 1 à 9, dans lequel l'aéronef comprend un aéronef à voilure non fixe, un hélicoptère ou un véhicule aérien sans pilote (UAV).

11. Procédé de détermination du poids à l'atterrissage d'un aéronef (100) configuré pour déterminer le poids brut exact d'un aéronef (100), le procédé de détermination du poids à l'atterrissage d'un aéronef (100) comprenant :
la détermination, par une unité de commande de détermination du poids brut, d'un poids brut exact d'un aéronef (100) à tout moment (106, 110) pendant un vol entre une porte de départ (102) à un emplacement de départ (103) et une porte d'arrivée (104) à l'emplacement d'arrivée (105) sur la base d'une première source de données de poids brut (GW1) de l'aéronef (100) et d'une deuxième source de données de poids brut (GW2) de l'aéronef (100) déterminées à partir de mesures pendant le vol, y compris les mesures d'un ou plusieurs capteurs de carburant embarqués, où la première source de données de poids brut est un premier poids brut basé sur la saisie par le pilote du poids brut à la porte de départ lorsque l'aéronef (100) est à la porte de départ (102) moins le poids de carburant déterminé sur la base d'une consommation de carburant calculée entre la porte de départ (102) et le moment souhaité en supposant une diminution constante du poids pendant le vol, où la détermination comprend :
de comparer le premier poids brut à un seuil de poids maximal en réponse à la détermination que le premier poids brut n'est pas constant pendant au moins une partie du vol, où la détermination que le premier poids brut n'est pas constant comprend la détermination qu'une pente décroissante du premier poids brut, à mesure que le carburant est consommé, n'est pas constante ;
de comparer le deuxième poids brut au seuil de poids maximal après avoir déterminé que le premier poids brut est constant et que le deuxième poids brut n'est pas constant pendant au moins une partie du vol ; et
de déterminer que l'aéronef (100) est en surcharge lorsque le premier poids brut ou le deuxième poids brut dépasse le seuil de poids maximal.

12. Procédé de détermination du poids à l'atterrissage d'un aéronef (100) selon la revendication 11, dans lequel la détermination comprend la détermination du poids brut exact de l'aéronef (100) à tout moment (106, 110) au cours d'un vol de l'aéronef (100) entre une porte de départ (102) à un emplacement de départ (103) et une porte d'arrivée (104) à l'emplacement d'arrivée (105).

13. Procédé de détermination du poids à l'atterrissage d'un aéronef (100) selon la revendication 11, comprenant en outre la prédiction, par l'unité de commande de détermination du poids brut, d'un poids brut de l'aéronef (100) à l'emplacement d'arrivée (105) avant l'atterrissage, sur la base du poids brut exact de l'aéronef (100).

14. Procédé de détermination du poids à l'atterrissage de l'aéronef (100) selon la revendication 11, selon lequel la détermination comprend :
d'ignorer les premiers écarts de données (400) dans la première source ;
d'ignorer les deuxièmes écarts de données (400) dans la deuxième source ;
de combiner les données de poids brut exact provenant de la première source et de la deuxième source ;
et de déterminer le poids brut exact de l'aéronef (100) sur la base de la combinaison.

15. Procédé de détermination du poids à l'atterrissage d'un aéronef (100) selon l'une quelconque des revendications 11 à 14, dans lequel l'unité de commande de détermination du poids brut détermine que le premier poids brut est constant s'il n'y a pas d'écarts de données dans le premier poids brut.
